# EUROPÄISCHE PATENTSCHRIFT

(11) **EP 0 492 035 B1**
(45) Veröffentlichungstag und Bekanntmachung des Hinweises auf die Patenterteilung: **06.07.1994**
(21) Anmeldenummer: 91104194.5
(22) Anmeldetag: 19.03.1991
(51) Int. Cl.: B60D 1/52

(54) **Anhängevorrichtung für insbesondere Personenkraftwagen**
Hitch coupling, specially for motor vehicles
Attelage de remorque, en particulier pour véhicules automobiles

(30) Priorität: 24.12.1990 DE 4041796
(43) Veröffentlichungstag der Anmeldung: 01.07.1992
(73) Patentinhaber: ORIS FAHRZEUGTEILE HANS RIEHLE GmbH, 71696 Möglingen (DE)
(72) Erfinder: Riehle, Hans, Dipl.-Ing. FH., W-7140 Ludwigsburg (DE)

(56) Entgegenhaltungen:
- DE-A- 3 317 453
- DE-U- 8 000 575
- FR-A- 2 390 304
- GB-A- 2 205 291

## Beschreibung

Die Erfindung bezieht sich auf eine Anhängevorrichtung für insbesondere Personenkraftwagen, die aus einem am Heck des Fahrzeuges befestigten Aufnahmeteil und aus einem Kugelhals mit Kupplungskugel besteht, der seitlich vorstehende Bolzen zum lösbaren Einhängen in den Aufnahmeteil aufweist und in dem im wesentlichen aus einem federbelasteten Riegelbolzen und Auslösestift bestehende Mittel vorgesehen sind, durch die beim Einhängen des Kugelhalses in den Aufnahmeteil eine selbsttätige Verriegelung stattfindet, die willkürlich aufhebbar ist.

Eine derartige Anhänger vorrichtung ist aus GB-A-2 205 291 bekannt.

Der Erfindung liegt die Aufgabe zugrunde, eine Anhängevorrichtung der vorstehend beschriebenen Art so auszubilden, daß eine kostengünstige Fertigung möglich ist, daß am Gesamtgewicht eingespart werden kann und daß im Interesse der Sicherheit Fehlbedienungen beim Einsetzen des Kugelhalses in den Aufnahmeteil nicht möglich sind. Außerdem kann das Ausschneiden des Stoßfängers vermieden werden.

Die gestellte Aufgabe wird erfindungsgemäß dadurch gelöst, daß der Kugelhals in seinem mit dem Aufnahmeteil verbindbaren Bereich an seiner Oberseite zwei mit Abstand von einander angeordnete, seitlich vom Kugelhals abragende Querbolzen aufweist, von denen der eine Querbolzen in trichterförmige Führungen seitlich am Aufnahmeteil und der andere Querbolzen in ebenfalls seitlich am Aufnahmeteil angeordnete Führungen eingreift, die den Querbolzen umgreifen, und zwischen den beiden Querbolzen in einer Hülsenführung eine Sicherungskugel angeordnet ist, die vom im Kugelhals angeordneten Riegelbolzen gegen eine entsprechende Wölbung im Aufnahmeteil gedrückt wird, derart, daß die Querbolzen fest in ihren Führungen mit dem Aufnahmeteil verbunden sind.

Die getroffene Ausbildung der Anhängevorrichtung macht es möglich, den Aufnahmeteil als gewichteinsparenden Feingußteil zu verwenden, alle beweglichen Teile allein im Kugelhals anzuordnen und Fehlbedienungen insoweit zu vermeiden, daß bei nicht ordnungsgemäßem Einhängen des Kugelhalses in den Aufnahmeteil der Kugelhals jeweils aus dem Aufnahmeteil herausfällt.

Vorteilhafte Ausgestaltungen des Erfindungsgegenstandes sind den Unteransprüchen und der Zeichnungsbeschreibung entnehmbar.

In der Zeichnung zeigen in einem Ausführungsbeispiel:
- Fig. 1: einen Längsschnitt durch einen Kugelhals mit Kupplungskugel und Aufnahmeteil
- Fig. 2: eine Ansicht auf den Aufnahmeteil gemäß Pfeilrichtung II aus Fig. 1
- Fig. 3: einen Längsschnitt durch den Aufnahmeteil
- Fig. 4: einen Längsschnitt durch den Kugelhals mit darin angeordneter Auslösestiftführung
- Fig. 5: einen Querschnitt durch den Kugelhals im Bereich des Auslösestifts und
- Fig. 6: einen Querschnitt durch den Kugelhals im Bereich des Handhebels zur Bedienung der Verriegelungsvorrichtung.

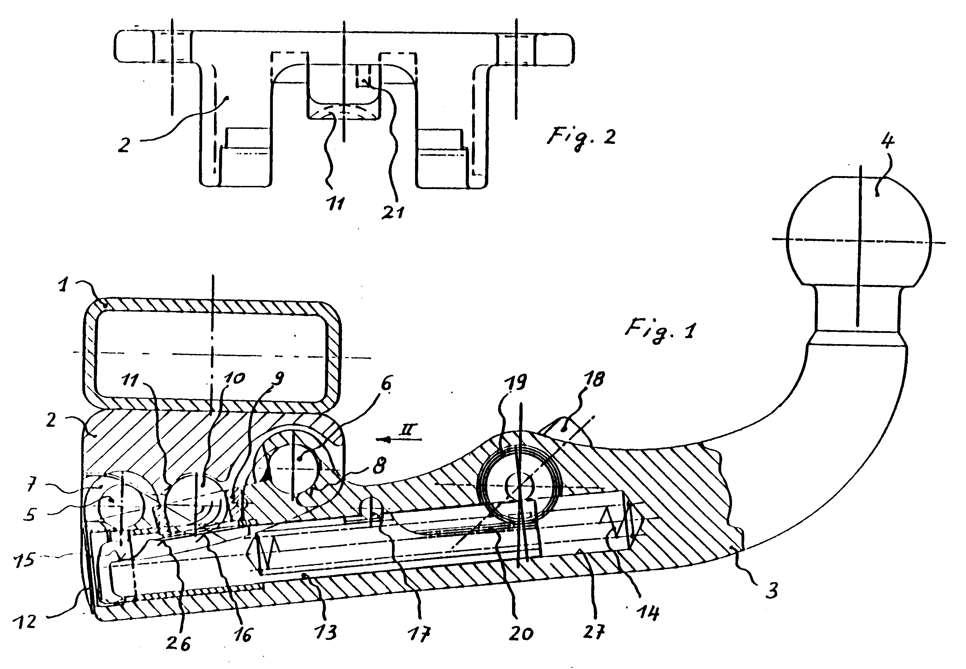

Nach Fig. 1 ist an einen Querträger 1, der am Heck eines Personenkraftwagens befestigt ist, ein Aufnahmeteil 2 angeschraubt, der zur Aufnahme und Befestigung eines Kugelhalses mit Kupplungskugel 4 dient. An seiner Oberseite in seinem mit dem Aufnahmeteil 2 verbindbaren Bereich weist der Kugelhals 3 zwei Querbolzen 5, 6 auf, die seitlich über den Kugelhals überstehen. Der Querbolzen 5 ist am vorderen Ende des Kugelhalses angeordnet, der Querbolzen 6 mit Abstand dahinter, wobei der Querbolzen 6 entfernter von der Mittellängsachse des Kugelhalses liegt als der Querbolzen 5. Bei im Aufnahmeteil 2 befestigtem Kugelhals 3 liegt der Querbolzen 5 in trichterförmigen Führungen 7 seitlich im Aufnahmeteil und der Querbolzen 6 in Führungen 8, die den Querbolzen teilweise umgreifen. Zwischen den Querbolzen 5, 6 ist im Kugelhals 3 in einer Hülsenführung 9 eine Sicherungskugel 10 angeordnet, die mit einer entsprechend gewölbten Fläche 11 im Aufnahmeteil 2 zusammenwirkt. Die Hülsenführung 9 ist mit einem Bördelrand versehen, damit die Sicherungskugel 10 nicht aus der Hülsenführung austreten kann.

In einer Längsbohrung durch den Kugelhals 3, die nach außen durch eine Kappe 12 abgeschlossen ist, liegt ein Riegelbolzen 13, der durch eine Druckfeder 14 belastet ist. Der Riegelbolzen 13 ist an seinem vorderen Ende mit einer gerundeten Ausnehmung 15 versehen, deren Radius dem der Sicherungskugel 10 entspricht. Anschließend an die Ausnehmung 15 befindet sich an der Oberseite des Kugelhalses eine Schrägfläche 16, auf der sich die Sicherungskugel 10 abstützt.
Bei im Aufnahmeteil 2 verriegeltem Kugelhals 3 nehmen alle Teile die aus Fig. 1 ersichtliche Lage ein. Der Riegelbolzen 13 drückt mit seiner Schrägfläche 16 die Sicherungskugel 10 gegen die gewölbte Fläche 11, so daß der Kugelhals 3 bei Abstützung der Querbolzen 5 in den trichterförmigen Führungen 7 mit dem Querbolzen 6 in die Führungen 8 gedrückt wird.

In der gezeigten Stellung des Kugelhalses 3 erfolgt eine Lagesicherung des Kugelhalses durch einen Sicherungsstift 17. Neben der Druckfeder 14 wirkt als weitere Sicherung für die Lage des Kugelhalses ein nicht gezeigtes Steckschloß, das am Handhebel 18 befestigt ist und in den Kugelhals eingreift und die Kuhle 26 im Riegelbolzen 13. Der Handhebel 18 ist mit einem Ritzel 19 verbunden, das in eine entsprechende Verzahnung 20 am Riegelbolzen eingreift.

Zum Lösen der Verriegelung des Kugelhalses wird der Riegelbolzen 13 mittels des Handhebels 18 und des Ritzels 19 in die Bohrung 27 hineinbewegt, so daß die Sicherungskugel 10 entlang der Schrägfläche 16 in die Ausnehmung 15 gleitet. Daraufhin kann der Kugelhals mit seinem Querbolzen 6 aus den Führungen 8 unter Verschiebung des Querbolzens 5 in die Führungen 7 herausgehoben werden. Wird umgekehrt beim Einsetzen des Kugelhalses dieser nicht richtig in den Aufnahmeteil eingehängt, fällt er immer aus dem Aufnahmeteil raus.

Wie aus Fig. 2 hervorgeht, baut der Aufnahmeteil 2 sehr klein und gewichtsparend. Die Führungen für die Querbolzen befinden sich in seinen Seitenteilen und die gewölbte Fläche 11 für die Sicherungskugel 10 in der Mitte. Soweit erforderlich, könnte am Aufnahmeteil 2 ein Vorsprung 21 und am Kugelhals eine entsprechende Ausnehmung als Vertauschsicherung vorgesehen sein, so daß kein anderer Kugehals in den Aufnahmeteil paßt.

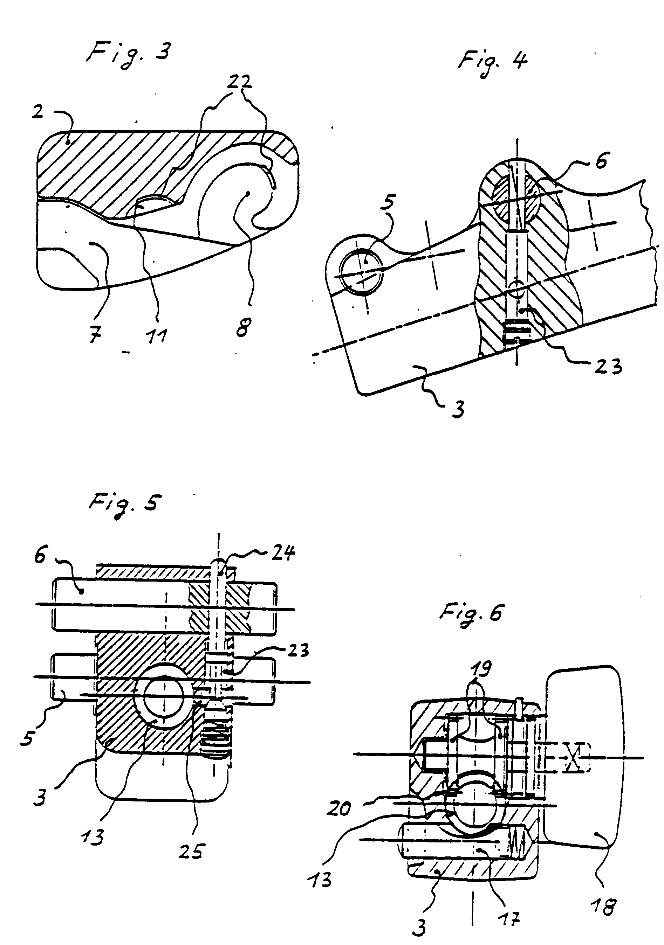

Fig. 3 zeigt die Führungen 7,8 im Aufnahmeteil 2 und die gewölbte Fläche 11 für die Sicherungskugel. Außerdem zeigt sie Ausnehmungen 22, die dazu geeignet sind, eventuelle Verschmutzungen aufzunehmen und eine definierte Anlage zu gewährleisten.

In Fig. 4 ist eine Bohrung 23 gezeigt, die von unten schräg nach oben durch den Kugelhals 3 und durch den Querbolzen 6 führt. In dieser Bohrung 23 ruht gemäß Fig. 5 ein federbelasteter Auslösestift 24, der über eine Kugel 25 mit dem Riegelbolzen 13 zusammenwirkt, derart, daß beim Einsetzen des Kugelhals 13 in den Aufnahmeteil 2 der Auslösestift 24 vom Aufnahmeteil 2 in den Kugelhals hineingedrückt wird und die den Riegelbolzen 13 sperrende Kugel 25 den Riegelbolzen freigibt.

Aus Fig. 6 ist ersichtlich, wie der Handhebel 18 über das Ritzel 19 und die Verzahnung 20 mit dem Riegelbolzen 13 zusammenwirkt. Der Sicherungsstift 17 blockiert den Riegelbolzen 13, wenn dieser den Kugelhals 3 im Aufnahmeteil 2 verspannt.

## Patentansprüche

1. Anhängevorrichtung für insbesondere Personenkraftwagen, die aus einem am Heck des Fahrzeuges befestigten Aufnahmeteil (2) und aus einem Kugelhals (3) mit Kupplungskugel (4) besteht, der seitlich vorstehende Bolzen (5, 6) zum lösbaren Einhängen in den Aufnahmeteil (2) aufweist und in dem im wesentlichen aus einem federbelasteten Riegelbolzen (13) und Auslösestift bestehende Mittel vorgesehen sind, durch die beim Einhängen des Kugelhalses (3) in den Aufnahmeteil (2) eine selbsttätige Verriegelung stattfindet, die willkürlich aufhebbar ist, dadurch gekennzeichnet, daß der Kugelhals (3) in seinem mit dem Aufnahmeteil (2) verbindbaren Bereich an seiner Oberseite zwei mit Abstand voneinander angeordnetete, seitlich vom Kugelhals (3) abragende Querbolzen (5, 6) aufweist, von denen der eine Querbolzen (5) in trichterförmige Führungen (7) seitlich am Aufnahmeteil (2) und der andere Querbolzen (6) in ebenfalls seitlich am Aufnahmeteil (2) angeordnete Führungen (8) eingreift, die den Querbolzen (6) teilweise umgreifen und am Kugelhals (3) zwischen den beiden Querbolzen in einer Hülsenführung (9) eine Sicherungskugel (10) angeordnet ist, die vom im Kugehals angeordneten Riegelbolzen (13) gegen eine entsprechende Wölbung (11) im Aufnahmeteil (2) gedrückt wird, derart, daß die Querbolzen (5, 6) fest in ihren Führungen (7, 8) mit dem Aufnahmeteil (2) verbunden sind.

2. Vorrichtung nach Anspruch 1, dadurch gekennzeichnet, daß die trichterförmige Führung (7) den Kugelhals (3) an den Querbolzen (5) an einander gegenüberliegenden Seiten abstützt und der Querbolzen (5) zur Vermeidung von Fehlbedingungen länger als der Querbolzen (6) ausgeführt ist.

3. Vorrichtung nach den Ansprüchen 1 und 2, dadurch gekennzeichnet, daß die den Querbolzen (6) teilweise umgreifende Führung (8) als Einhängeführung ausgebildet ist.

4. Vorrichtung nach den Ansprüchen 1 bis 3, dadurch gekennzeichnet, daß die Führungen mit Ausnehmungen (22) versehen sind.

5. Vorrichtung nach den Ansprüchen 1 bis 4, dadurch gekennzeichnet, daß der Auslösestift (24) derart senkrecht zum Riegelbolzen (13) neben diesem liegend im Kugelhals (3) angeordnet ist, daß er beim Einhängen des Kugelhalses in den Aufnahmeteil (2) an dessen obere Innenkontur anstößt.

6. Vorrichtung nach den Ansprüchen 1 bis 5, dadurch gekennzeichnet, daß der Riegelbolzen (13) mit einer Anlaufschräge (16) versehehen ist, an welcher die Sicherungskugel (10) bei verriegeltem Kugehals (3) anliegt.

7. Vorrichtung nach den Ansprüchen 1 bis 6, dadurch gekennzeichnet, daß der Riegelbolzen (13) mit einer Ausnehmung (15) versehen ist, in welche die Sicherungskugel (10) bei entriegeltem Kugelhals eintritt.

8. Vorrichtung nach den Ansprüchen 1 bis 7, dadurch gekennzeichnet, daß die Hülsenführung (9) für die Sicherungskugel (10) mit einem Bördelrand versehen ist, der die Sicherungskugel vor einem Austreten aus der Führung hindert.

9. Vorrichtung nach den Ansprüchen 1 bis 8, dadurch gekennzeichnet, daß ein federbelasteter, bei Druck von Hand auslösbarer Sicherheitsstift (17) vorgesehen ist, der bei verriegeltem Kugelhals dessen Lage sichert.

10. Vorrichtung nach den Ansprüchen 1 bis 9, dadurch gekennzeichnet, daß im Kugelhals über oder unter dem Riegelbolzen (13) liegend ein durch einen Hebel (18) oder Handrad bedienbares Ritzel (19) angeordnet ist, dessen Verzahnung in eine solche am Riegelbolzen eingreift.

11. Vorrichtung nach den Ansprüchen 1 bis 10 dadurch gekennzeichnet, daß am Hebel (18) oder Handrad ein Steckschloß vorgesehen ist, das in den Kugelhals (3) formschlüssig eingreift.

12. Vorrichtung nach den Ansprüchen 1 bis 11 dadurch gekennzeichnet, daß das Riegelsystem 3 Sicherungen besitzt, Kuhle (26), Sicherungsstift (17) und Steckschloß im Hebel oder Handrad (18).

## Claims

1. Trailer chuck for especially cars which consists of a taking up part (2) fastened at the back of the vehicle and of a ball neck (3) with coupling ball (4) that shows lateral projecting pins (5, 6) for detachable hooking into the taking up part (2) and in which means are intended consisting essentially of a spring-stressed bar pin (13) and a release bolt by means of which an automatic lock is given when hooking in the ball neck (3) into the taking up part (2), that can be stopped arbitrary characterized by the ball neck (3) showing two cross bolts (5, 6) arranged in distance of each other lateral projecting from the ball neck (3) in its area which can be connected with the taking up part (2) at its upper side, of which the one cross bolt (5) engages in funnel-shaped guides (7) arranged lateral at the taking up part (2) and the other cross bolt (6) engages also in lateral at the taking up part (2) arranged guides (8), which encircle partly the cross bolt (6) and at the ball neck (3) a locking ball (10) is arranged between the cross bolts in a sleeve guide (9) that is pressed against a corresponding buckling (11) in the taking up part (2) through the bar pin (13) arranged in the ball neck in such a way that the cross bolts (5, 6) are connected tightly in its guides (7, 8) with the taking up part (2).

2. Chuck according to claim 1, characterized by funnel-shaped guide (7) which supports the ball neck (3) at the cross bolts (5) at sides opposite to each other and by the cross bolt (5) which is performed longer as the cross bolt (6) in order to avoid misconditions.

3. Chuck according to the claims 1 and 2, characterized by the guide (8) partly encircling the cross bolt (6) being designed as guide to hang in.

4. Chuck according to the claims 1 to 3, characterized by guides which are furnished with recesses (22).

5. Chuck according to the claims 1 to 4, characterized by the release bolt (24) arranged vertical and lieing next to the bar pin (13) in the ball neck (3) in such a way that it strikes the upper inner contour of the taking up part (2) when hanging the ball neck into it.

6. Chuck according to the claims 1 to 5, characterized by the bar bolt (13) provided with a starting slant (16) at which the locking ball (10) borders with closed ball neck (3).

7. Chuck according to the claims 1 to 6, characterized by the bar bolt (13) supplied with a recess (15) in which the locking ball (10) enters when the ball neck is unlocked.

8. Chuck according to the claims 1 to 7, characterized by the sleeve guide (9) which is furnished with a crimping border for the locking ball (10) which avoids the locking ball to go out of the guide.

9. Chuck according to the claims 1 to 8, characterized by a spring-stressed safety pin (17) to be opened by pressure with hand which secures the position of the ball neck when it is locked.

10. Chuck according to the claims 1 to 9, characterized in that way that in the ball neck a pinion (19) is arranged lieing above or below the bar bolt (13) to be handled by a lever (18) or hand-wheel the interlocking of which engages in a sort of such at the bar bolt.

11. Chuck according to the claims 1 to 10, characterized by a socket lock at the lever (18) or hand-wheel which interferes positive in the ball neck (3).

12. Chuck according to the claims 1 to 11, characterized in such a way that the bar system has 3 safety devices, poud (26), safety pin (17) and socket load in the lever or hand-wheel (18).

## Revendications

1. Dispositif d'attelage, en particulier pour voitures, constitué d'une pièce réceptrice (2) fixée à l'arrière du véhicule et d'un manche à bille (3) avec bille d'accouplement (4), présentant des boulons saillants sur les côtés (5, 6) pour l'attelage amovible dans la pièce réceptrice (2) et dans laquelle sont prévus essentiellement des moyens constitués pour l'essentiel par un boulon de verrouillage (13) commandé par ressort et une goupille de déclenchement, par lesquels un verrouillage automatique est réalisé lors de l'accrochage du manche à bille (3) dans la pièce réceptrice (2), verrouillage supprimable à volonté, dispositif caractérisé par le fait, que le manche à bille (3), dans sa zone connectable avec la pièce réceptrice (2), présente sur sa face supérieure deux boulons transversaux (5, 6), disposés à l'écart l'un de l'autre, saillants latéralement du manche à bille (3), dont l'un d'eux (5) prend dans des guides en forme d'entonnoir (7) disposés latéralement à la pièce réceptrice (2) et dont l'autre (6) prend dans des guides (8) également disposés latéralement à la pièce réceptrice (2) qui enveloppent en partie le boulon transversal (6), et par le fait, qu'au manche à bille (3) entre les deux boulons transversaux une bille de sécurité (10) est disposée dans un guide (9), qui est pressée par le boulon de verrouillage (13) disposé dans le manche à bille contre un bombement (11) correspondant dans la pièce réceptrice (2), de façon à ce que les boulons transversaux (5, 6) dans leurs guides (7, 8) soient fermement joints avec la pièce réceptrice (2).

2. Dispositif comme Revendication 1, caractérisé par le fait, que le guide en forme d'entonnoir (7) soutient le manche à bille (3) aux boulons latéraux (5) sur des côtés opposés et que le boulon transversal (5) est plus long que le boulon transversal (6), ce afin d'éviter de faux maniements .

3. Dispositif comme Revendications 1 et 2, caractérisé par le fait, que le guide (8) enveloppant partiellement le boulon transversal (6) est formé comme guide d'attelage.

4. Dispositif comme Revendications 1 à 3, caractérisé par le fait, que les guides sont munis d'encoches (22).

5. Dispositif comme Revendications 1 à 4, caractérisé par le fait, que la goupille de déchlenchement (24) est disposée couchée à côté et de telle façon verticalement au boulon de verrouillage (13) dans le manche à bille qu'elle donne contre le haut de la face intérieure lors de l'accrochage du manche à bille dans la pièce réceptrice (2).

6. Dispositif comme Revendications 1 à 5, caractérisé par le fait, que le boulon de verrouillage (13) est pourvu d'un biais (16), sur lequel la bille de sécurité (10) repose en position verrouillée du manche à bille (3).

7. Dispositif comme Revendications 1 à 6, caractérisé par le fait, que le boulon de verrouillage (13) est pourvu d'une encoche (15), dans laquelle la bille de sécurité (10) entre en position déverrouillée du manche à bille.

8. Dispositif comme Revendications 1 à 7, caractérisé par le fait, que le guide (9) pour la bille de sécurité (10) est muni d'un collet rabattu qui empêche la bille de sécurité de sortir du guide.

9. Dispositif comme Revendications 1 à 8, caractérisé par le fait, qu'il est prévu une goupille de sécurité (17), pouvant être déclenchée par pression manuelle, assurant la position du manche à bille à l'état verrouillé.

10. Dispositif comme Revendications 1 à 9, caractérisé par le fait, que dans le manche à bille est disposé, couché sous ou sur le boulon de verrouillage (13), un pignon (19) manoeuvrable par un levier (18) ou un volant à main, et dont la denture prend dans une telle au boulon de verrouillage.

11. Dispositif comme Revendications 1 à 10, caractérisé par le fait, qu'au levier (18) ou au volant à main, il est prévu une sécurité de blocage qui prend dans le manche à bille (3).

12. Dispositif comme Revendications 1 à 11, caractérisé par le fait, que le système de verrouillage possède 3 sécurités, creux (26), goupille de sécurité (17) et sécurité de blocage dans le levier ou le volant à main (18).
